Europäisches Patentamt

European Patent Office

Office européen des brevets

(19)

(11) Veröffentlichungsnummer: **0 152 570**
**B1**

(12) **EUROPÄISCHE PATENTSCHRIFT**

(45) Veröffentlichungstag der Patentschrift: **29.08.90**

(21) Anmeldenummer: **84114844.8**

(22) Anmeldetag: **06.12.84**

(51) Int. Cl.⁵: **H 01 S 3/038,** H 01 S 3/0971, H 01 S 3/08

(54) **Gaslaser insbesondere TE-Laser.**

(30) Priorität: **03.02.84 DE 3403841**

(43) Veröffentlichungstag der Anmeldung:
**28.08.85 Patentblatt 85/35**

(45) Bekanntmachung des Hinweises auf die Patenterteilung:
**29.08.90 Patentblatt 90/35**

(84) Benannte Vertragsstaaten:
**BE CH DE FR GB IT LI NL SE**

(56) Entgegenhaltungen:
**EP-A-0 001 032**
**DD-A- 136 680**
**DE-A-3 126 375**
**DE-A-3 136 447**
**FR-A-2 364 552**

(73) Patentinhaber: **Siemens Aktiengesellschaft**
**Wittelsbacherplatz 2**
**D-8000 München 2 (DE)**

(72) Erfinder: **Brumme, Gerhard, Dr.,Dipl.-Phys.**
**Am Lochfeld 25**
**D-8088 Eching (DE)**

Courier Press, Leamington Spa, England.

**Beschreibung**

Die Erfindung betrifft einen Gaslaser, insbesondere TE-Laser, mit zwei in einer gasgefüllten Entladungskammer sich in Richtung der optischen Achse erstreckenden Hauptelektroden, gegebenenfalls mindestens einer Vorionisierungseinrichtung und einem Resonator mit einem vollreflektierenden optischen Element und einem teildurchlässigen Auskoppelelement (z.B. DE-A-3126375).

Bei bestimmten Anwendungen, wie z.B. bei Entfernungsmessungen, werden an derartige Laser häufig mehrere, relativ genau definierte und gleichzeitig zu erfüllende Forderungen gestellt. So wird für bestimmte Einsatzbereiche eine kleine, kompakte Bauweise gefordert, deren Länge im Bereich von etwa 200 mm liegen darf. Eine weitere Forderung bezieht sich auf die Ausgangsenergie bzw. Ausgangsleistung, wobei etwa 100 mJ bzw. etwa 1 MW erreicht werden müssen. Außerdem muß der emittierte Laserstrahl eine sehr kleine Divergenz von etwa 3,5 mrad haben, die systemspezifisch bedingt ist. Die Forderungen bezüglich der Kompaktheit und der Divergenz führen zu der Erkenntnis, einen Grundmodelaser einzusetzen, dessen Resonator dann aber gefaltet werden muß, da ansonsten bei einer Baulänge von etwa 200 mm und dem dann nur noch zu Verfügung stehenden kleinen Durchmesser für das Grundmodevolumen die bezüglich der Ausgangsenergie bzw. der Ausgangsleistung gestellte Forderung nicht mehr zu erfüllen ist.

Derartige Laser sind sehr schwierig zu realisieren und bedingen in elektrischer, mechanischer und optischer Hinsicht einen aufwendigen Aufbau und ein Zusammenwirken vieler einzelner Elemente, was hinsichtlich der gegenseitigen Abstimmung bzw. Justierung dieser Elemente zu Schwierigkeiten führt.

Der Erfindung liegt daher die Aufgabe zugrunde, für einen Laser der eingangs genannten Art die genannten Forderungen bei möglichst geringem Aufwand und einfachem Aufbau zu erfüllen.

Diese Aufgabe wird bei einem Laser der eingangs genannten Art gemäß der Erfindung dadurch gelöst, daß die Form und der Abstand der beiden Hauptelektroden voneinander so gewählt und aufeinander abgestimmt sind, daß die Breite des zwischen den Hauptelektroden entstehenden, zur Laserstrahlung nutzbaren Entladungskanals mindestens doppelt so groß ist wie die dem Abstand der Hauptelektroden entsprechende Höhe dieses Entladungskanals, und daß der Resonator mindestens ein den Laserstrahl innerhalb dieses Entladungskanals faltendes optisches Element enthält.

Der Erfindung liegt der Gedanke zugrunde in den zwischen, den beiden Hauptelektroden entstehenden einzigen Entladungskanal einen gefalteten Resonator zu integrieren und somit innerhalb dieses Entladungskanals mehrere nebeneinander laufende optische Kanäle mit gefalteter optischer Achse zu bilden. Dieser Lösungsgedanke wird erfindungsgemäß dadurch realisiert, daß durch die Ausbildung und die Anordnung der beiden Hauptelektroden ein Entladungskanal entsteht, dessen Breite, d.h. dessen zur Laserstrahlung nutzbare Ausdehnung in einer Richtung senkrecht zur optischen Achse, mindestens doppelt so groß ist wie seine Höhe, d.h. dessen zur Laserstrahlung nutzbare Ausdehnung in einer zur ersten Richtung senkrechten Richtung. Somit ergeben sich also für den Fall, daß die Breite des Entladungskanals gleich der doppelten Höhe ist, zwei nebeneinander laufende optische Kanäle, wobei die optische Achse einmal gefaltet ist. Hierbei ist das den Laserstrahl faltende optische Element, um eine Faltung innerhalb des Entladungskanals zu bewirken, selbstverständlich so auszubilden, daß es diesen Entladungskanal überspannt, d.h. im Fall von zwei nebeneinander laufenden optischen Kanälen die hierbei anfallende nutzbare Laserstrahlung beider Kanäle in voller Breite aufzunehmen und zu reflektieren vermag.

Bei einem erfindungsgemäßen Laser ist die Integration eines gefalteten Resonators in einen einzigen Entladungskanal bei nur zwei Hauptelektroden realisiert, so daß für die Hauptentladung und auch eine gegebenenfalls vorgesehene Vorionisierung nur wenige Elemente erforderlich sind. Es ergibt sich dadurch bei einfachster Elektrodenkonfiguration in elektrischer Hinsicht ein einfacher, hinsichtlich der Elektrodenanordnung und -zuordnung leicht beherrschbarer Aufbau bei geringstmöglichem Aufwand an Einzelelementen. Aufgrund der Resonatorfaltung in einem einzigen, zwischen nur zwei Hauptelektroden gebildeten Entladungskanal ergibt sich dieser Vorteil in optischer Hinsicht auch für das den Resonator faltende optische Element, welches dann kompakter und kleiner ausführbar und damit auch optisch einfacher herstellbar ist. Der erfindungsgemäße Laser hat somit den wesentlichen Vorteil, daß alle der genannten Forderungen gleichzeitig in einer Lösung bei einfachster Elektrodenkonfiguration mit geringstmöglichen Aufwand und einfachem Aufbau erfüllt werden.

Bei einem erfindungsgemäßen Laser werden die Hauptelektroden in vorteilhafter Weise so ausgebildet, daß sie ein einem Rogowsky- oder Chang-Profil zumindest ähnliches profil aufweisen. Damit ist ein Profil gemeint, durch dessen Form gewährleistet ist, daß im gesamten Bereich zwischen den beiden Hauptelektroden keine störenden Feldüberhöhungen entstehen.

Bei einer besonders vorteilhaften Weiterbildung eines erfindungsgemäßen Lasers ist vorgesehen, daß mindestens eine der Hauptelektroden in der Mitte ihrer Breite mit einer sich in Richtung der optischen Achse erstreckenden Vertiefung ausgebildet ist, so daß der Entladungskanal in der Mitte eine in Richtung der optischen Achse verlaufende verdünnte Zone aufweist. Diese Maßnahme ist insbesondere im Hinblick auf die im Resonator enthaltenen optischen Elemente von Vorteil, da die Kanten oder Ränder, welche diese optischen Elemente oder deren Spiegelflächen aufweisen oder zwischen einzelnen optischen Elementen bilden, so angeordnet werden können, daß sie sich in einer im Hinblick auf Lasertätigkeit stark verdünnten Zone befinden und so gegen Beschädigung oder Zerstörung geschützt sind. Bei einer in diesem Zusammenhang zweckmäßigen Gestaltung der Hauptelektroden ist die Vertiefung rillenförmig ausgebildet, wobei das Rillenprofil dem profil der Hauptelektroden angepaßt ist. Dies bedeutet, daß das Rillenprofil eine dem Rogowsky- oder Chang-Profil zumindest ähnliche Form aufweist und am Übergang der Rille in die wirksame Hauptfläche einer Elektrode eine dem Profil der Hauptelektrode entsprechende, angepaßte Form hat.

Bei einem erfindungsgemäßen Laser weist das den Laserstrahl faltende optische Element zwei miteinander einen rechten Winkel und zur optischen Achse einen Winkel von jeweils 45° einschließende Spiegelflächen auf. Dabei kann dieses Faltelement in der veschiedensten Weise ausgebildet sein. So ist es möglich, für das Faltelement ein Dachkantprisma oder ein Prisma zu verwenden, das in der angegebenen Weise an der dem Entladungskanal zugewandten Seite mit Spiegelflächen ausgebildet ist. Anstelle eines einteiligen Faltelementes können auch zwei einzelne Spiegel oder Prismen vorgesehen werden.

Ein vorteilhaftes Ausführungsbeispiel eines erfindungsgemäßen Lasers weist einen Resonator auf, bei dem das teildurchlässige Auskoppelelement und das vollreflektierende optische Element gemeinsam an einer Resonatorseite und das den Laserstrahl faltende optische Element auf der gegenüberliegenden Resonatorseite angeordnet sind. Dabei ist es möglich, für das teildurchlässige Auskoppelelement und das vollreflektierende optische Element zwei separate Spiegel vorzusehen oder Auskoppelelement und vollreflektierendes Element auf einen gemeinsamen Träger anzuordnen und durch ein Substrat mit unterschiedlicher Vergütung zu bilden.

Ein bevorzugtes Ausführungsbeispiel eines erfindungsgemäßen Lasers ist anhand der Zeichnung im folgenden näher beschrieben.

Fig. 1 zeigt in schematischer Darstellung den prinzipiellen Aufbau eines erfindungsgemäßen Lasers im Querschnitt,

Fig. 2 einen Schnitt II-II nach Fig. 1.

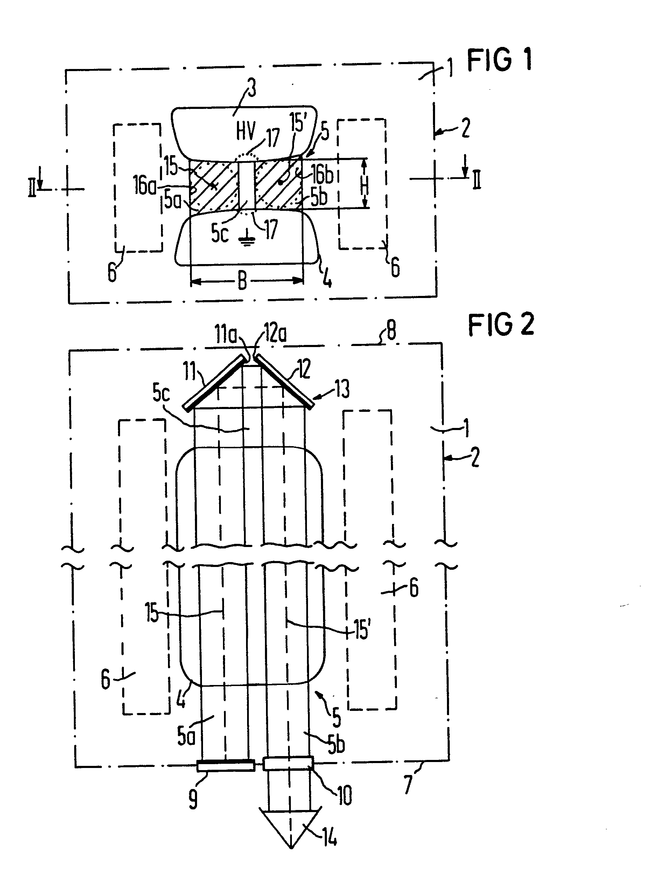

Der Laser nach den Fig. 1 und 2 ist ein TE (*transversely excited*)-Laser, insbesondere ein $CO_2$-Laser, mit einer gasgefüllten Entladungskammer 1, die von einem strichpunktiert angedeuteten Hohlkörper 2, z.B. mit rundem Querschnitt, gebildet ist und den Resonatorraum enthält. Ferner enthält die Entladungskammer 1 ein Elektrodensystem aus zwei einander gegenüberliegenden, sich parallel zueinander in Richtung der optischen Achse 15, 15' erstreckenden Hauptelektroden 3 und 4, die an den einander zugekehrten Außenkonturen ein einem Rogowsky-oder Chang-Profil zumindest ähnliches Profil aufweisen. Eine der Hauptelektroden liegt hier an Masse, während die andere Hauptelektrode an Hochspannung (HV) liegt. Es können aber auch beide Hauptelektroden an Hochspannung mit verschiedenem Potential liegen. Die Hauptelektroden 3 und 4 erzeugen eine Entladung, so daß zwischen ihnen ein elektrischer Entladungskanal 5 gebildet wird, durch den hindurch die Laserstrahlung geleitet wird. Außerdem enthält das Elektrodensystem noch zwei in gestrichelten Linien eingezeichnete, seitlich der Hauptelektroden 3, 4 angeordnete und sich ebenfalls in Richtung der optischen Achse 15, 15' erstreckende Vorionisierungseinrichtungen 6. Das gesamte Elektrodensystem kann einen an sich bekannten Aufbau aufweisen. So eignet sich beispielsweise für den vorliegenden Aufbau das in der älteren Patentanmeldung gemäß EP-A-0122597 näher angegebene und dort für einen TE-Gaslaser vorgesehene, aus Haupt- und Hilfselektroden für die Vorionisierung bestehende Elektrodensystem besonders gut.

Der Resonatorraum wird an zwei gegenüberliegenden Stirnseiten von zueinander parallelen und zur optischen Achse 15, 15' in senkrechten Ebenen verlaufenden Wänden 7 und 8 begrenzt, die vor allem der Halterung der Resonatorelemente dienen. Der optische Resonator besteht aus einem vollreflektierenden optischen Element 9 und einem teildurchlässigen Auskoppelelement 10, die beide als Spiegel ausgebildet sind und hier gemeinsam in die Stirnwand 7 auf einer Seite des Resonators integriert sind. Es sind jedoch auch verschiedene andere Spiegelanordnungen möglich. So können die Spiegel 9 und 10 z.B. auch in getrennten Ebenen, also in Richtung der optische Achse 15, 15' hintereinander liegend angeordnet, auf einem gemeinsamen Substrat mit unterschiedlicher Vergütung gebildet oder auf verschiedenen Resonatorstirnseiten vorgesehen werden. Ferner enthält der Resonator noch zwei weitere, an der gegenüberliegenden Resonatorstirnseite angeordnete und gegebenenfalls in die andere Stirnwand 8 integrierte vollreflektierende Spiegel 11 und 12, die miteinander einen rechten Winkel und zur optischen Achse 15, 15' einen Winkel von 45° einschließen. Diese Spiegel bilden ein hier aus zwei Teilen bestehendes optisches Element 13 zur Faltung des Laserstrahles innerhalb des Entladungskanals. Das optische Faltelement kann aber auch aus einem Teil bestehen, ist jedoch in jedem Fall immer gegenüber dem Auskoppelspiegel 10 angeordnet und so ausgebildet, daß es den Entladungskanal überspannt, d.h. die nutzbare Laserstrahlung in ihrer vollen Breite aufnimmt. Dabei sind der aus den Spiegeln 9, 10 und 11, 12 bestehende Resonator und das Elektrodensystem 3, 4 und 6 einander stets so zugeordnet, daß sich die Resonatorelemente zwischen den beiden Hauptelektroden 3, 4 und zwischen den Vorionisierungseinrichtungen 6, jedoch außerhalb des zwischen den Hauptelektroden 3, 4 entstehenden Entladungskanals 5 an dessen Stirnseiten befinden und der von dem vollreflektierenden Spiegel 9 reflektierte Laserstrahl im Freiraum zwischen den Hauptelektroden 3, 4 in Richtung auf den gegenüberliegenden Spiegel 11 des optischen Faltelementes 13 abstrahlt, der den Strahlenverlauf um 90° auf den hierzu gegenüberliegenden Spiegel 12 umlenkt, welcher seinerseits den Strahlenverlauf nochmals um 90° umlenkt, so daß der gefaltete Laserstrahl dann in Richtung des Zweiges 15' der optischen Achse zurückläuft und auf den teildurchlässigen Auskoppelspiegel 10 trifft und — durch diesen teilweise hindurchtretend — in Richtung des Pfeiles 14 nach außen gelangt. Bei dem erfindungsgemäßen Laser ist also in den zwischen den beiden Hauptelektroden 3 und 4 entstehenden Entladungskanal ein gefalteter Resonator integriert. Dadurch werden innerhalb dieses Entladungskanals zwei nebeneinander laufende optische Kanäle 5a und 5b gebildet, wobei die optische Achse des Kanales 5a durch das Element 13 in den Kanal 5b gefaltet wird, so daß die optische Achse zwei zueinander parallele Zweige 15 und 15' hat. Die Form und der Abstand der beiden Hauptelektroden 3 und 4 voneinander sind so gewählt und aufeinander abgestimmt, daß die Breite B des zur Laserstrahlung nutzbaren Entladungskanals 5 mindestens doppelt so groß ist wie die Höhe H dieses Entladungskanals. Dies ist auch in Fig. 1 eingezeichnet, wobei der elektrische Entladungskanal 5 durch eine Schraffur gekennzeichnet ist, während der optisch ausgenutzte Teil der Entladung durch punktiert eingezeichnete Kreise 16a und 16b angedeutet ist. Es entstehen also im vorliegenden Falle zwei optische Kanäle, deren Breite und Höhe gleich sind, d.h. es werden also hier zwei optische Kanäle mit etwa quadratischem Querschnitt gebildet. Um jedoch die Kanten oder Ränder der optischen Elemente des Resonators vor Beschädigung zu schützen, ist zwischen den beiden optischen Kanälen 5a und 5b eine im Hinblick auf Laserstrahlung verdünnte Zone gebildet, welche in Fig. 1 durch einen nicht schraffierten schmalen Bereich 5c kenntlich gemacht ist. Dadurch werden im Entladungskanal 5 im vorliegenden Falle also zwei optische Kanäle 5a und 5b mit einer dazwischen liegenden verdünnten Zone 5c gebildet, die hier dadurch entsteht, daß beide Hauptelektroden 3, 4 in der Mitte ihrer Breite an den einander zugekehrten Seiten jeweils einer rillenförmige Vertiefung 17 aufweisen, wobei das Rillenprofil dem Profil der Hauptelektroden angepaßt ist. Die in Fig. 1 ebenfalls punktiert eingezeichneten Vertiefungen 17 haben also am Übergang in die wirksame Elektrodenhauptfläche eine dem Rogowsky- oder Chang-Profil angepaßte Form. Wie in Fig. 2 zu sehen ist, werden somit die nahe einander benachbarten Spiegelkanten oder -ränder der optischen Elemente des Resonators, wie z.B. die in einem geringen Abstand voneinander angeordneten Spiegelkanten 11a und 12a der Spiegel 11 und 12 oder im Falle der Ausbildung des optischen Faltelementes als einteiliges Dachkantprisma die Dachkante dieses Prismas kaum mit Laserstrahlung beaufschlagt und daher weitgehend gegen Zerstörung geschützt.

Bei einem erfindungsgemäßen Laser ist es auch möglich, den Laserstrahl mehr als einmal zu falten. In diesem Fall würde sich an der Stelle des Auskoppelelementes 10 in Fig. 2 ein dem ersten Faltelement 13 gegenüberliegendes zweites Faltelement befinden und der Auskoppelspiegel 10 wäre dann gegenüber dem zweiten Faltelement anzuordnen, also auf der Seite des ersten Faltelementes 13. Bei einer derartigen Anordnung würde die optische Achse dann zweimal gefaltet und infolgedessen insgesamt drei zueinander parallele Zweige aufweisen.

## Patentansprüche

1. Gaslaser, insbesondere TE-Laser, mit zwei in einer gasgefüllten Entladungskammer sich in Richtung der optischen Achse erstreckenden Hauptelektroden, gegebenenfalls mindestens einer Vorionisierungseinrichtung und einem Resonator mit einem vollreflektierenden optischen Element und einem teildurchlässigen Auskoppelelement, dadurch gekennzeichnet, daß die Form und der Abstand der beiden Hauptelektroden (3, 4) voneinander so gewählt und aufeinander abgestimmt sind, daß die Breite (B) des zwischen den Hauptelektroden entstehenden, zur Laserstrahlung nutzbaren Entladungskanals (5) mindestens doppelt so groß ist wie die dem Abstand der Hauptelektrodem entsprechende Höhe (H) dieses Entladungskanals, und daß der Resonator mindestens ein den Laserstrahl innerhalb dieses Entladungskanals faltendes optisches Element (13) enthält.

2. Gaslaser nach Anspruch 1, dadurch gekennzeichnet, daß das den Laserstrahl faltende optische Element (13) zwei miteinander einen rechten Winkel und zur optischen Achse (15, 15') einen Winkel von jeweils 45° einschließende Spiegelflächen (11, 12) aufweist.

3. Gaslaser nach Anspruch 1 oder 2, dadurch gekennzeichnet, daß die Hauptelektroden (3, 4) ein einem Rogowsky- oder Chang-Profil zumindest ähnliches Profil aufweisen.

4. Gaslaser nach einem der Ansprüche 1 bis 3, dadurch gekennzeichnet, daß mindestens eine der Hauptelektroden (3, 4) in der Mitte ihrer Breite mit einer sich in Richtung der optischen Achse (15, 15') erstreckenden Vertiefung (17) ausgebildet ist, so daß der Entladungskanal (5) in der Mitte eine in Richtung der optischen Achse (15, 15') verlaufende verdünnte Zone (5c) aufweist.

5. Gaslaser nach Anspruch 4, dadurch gekennzeichnet, daß die Vertiefung (17) rillenförmig ausgebildet und das Rillenprofil dem Profil der Hauptelektroden (3, 4) angepaßt ist.

6. Gaslaser nach einem der vorhergehenden Ansprüche, dadurch gekennzeichnet, daß das teildurchlässige Auskoppelelement (10) und das vollreflektierende optische Element (9) des Resonators gemeinsam an einer Resonatorseite und das den Laserstrahl faltende optische Element (13) auf der gegenüberliegenden Resonatorseite angeordnet sind.

## Revendications

1. Laser à gaz, en particulier laser à gaz à excitation transversale, avec deux électrodes principales qui s'étendent dans une chambre de décharge en direction de l'axe optique, et éventuellement avec au moins un dispositif de pré-ionisation, ainsi qu'avec un résonateur à élément optique à réflexion et un élément de découplage ou de sortie semi- réfléchissant, caractérisé par le fait que la forme et la distance entre les deux électrodes principales (3, 4) sont choisies et adaptées entre elles de telle façon que la largeur (B) du canal de décharge (5) utilisable pour le rayonnement laser et qui se forme entre les deux électrodes principales est au moins égale au double de la hauteur (H) de ce canal de décharge, qui correspond à la distance entre les électrodes principales et que le résonateur comporte un élément optique (13) servant au dépliement du rayon laser dans ce canal de décharge.

2. Laser à gaz selon la revendication 1, caractérisé par le fait que l'élément optique (13) qui sert au dépliement du rayon laser, comporte deux surfaces réfléchissantes (11, 12) qui forment entre elles un angle droit et respectivement un angle de 45° avec l'axe optique (15, 15').

3. Laser à gaz selon la revendication 1 ou 2, caractérisé par le fait que les électrodes principales (3, 4) présentent un profil qui est au moins similaire au profil de Rogowsky ou au profil de Chang.

4. Laser à gaz selon l'une des revendications 1 à 3, caractérisé par le fait qu'au moins l'une des électrodes (3, 4) est pourvue, au milieu de sa largeur, d'une cavité (17) qui s'étend en direction de l'axe optique (15, 15'), en sorte que le canal de décharge (5) présente, au milieu, une zone amincie (5c) qui s'étend en direction de l'axe optique (15 15').

5. Laser à gaz selon la revendication 4, caractérisé par le fait que la gorge (17) se présente sous la forme d'un sillon et que le profil du sillon est adapté au profil des électrodes principales (3, 4).

6. Laser à gaz selon l'une des revendications précédentes, caractérisé par le fait que l'élément de découplage semi-transparent (10) et l'élément optique réfléchissant (9) du résonateur sont disposés en commun sur un côté du résonateur alors que l'élément optique (13) qui sert au dépliement du rayon laser est disposé sur le côté opposé du résonateur.

**Claims**

1. Gas laser, preferably a TE laser having two primary electrodes extending in the direction of the optical axis in a gas-filled discharge chamber, if appropriate having at least one pre-ionization device and one resonator with a fully reflective optical element and a partially permeable output coupling element, characterized in that the shape and the distance of the two primary electrodes (3, 4) from one another are selected in such a way and matched to one another in such a way that the width (B) of the discharge channel (5) which results between the primary electrodes and can be used for laser radiation is at least twice as large as the height (H), corresponding to the distance between the primary electrodes, of this discharge channel, and in that the resonator contains at least one optical element (13) which folds the laser beam within this discharge channel.

2. Gas laser according to Claim 1, characterized in that the optical element (13) which folds the laser beam has two mirror surfaces (11, 12) enclosing a right angle between one another and an angle of in each case 45° with the optical axis (15, 15').

3. Gas laser according to Claim 1 or 2, characterized in that the primary electrodes (3, 4) have a profile which is at least similar to a Rogowsky or Chang profile.

4. Gas laser according to one of Claims 1 to 3, characterized in that at least one of the primary electrodes (3, 4) is designed with a depression (17) in the centre of its width, said depression extending in the direction of the optical axis (15, 15') so that the discharge channel (5) has in the centre a rarefied zone (5c) extending in the direction of the optical axis (15, 15').

5. Gas laser according to Claim 4, characterized in that the depression (17) is of flute-shaped construction and the flute-like profile is matched to the profile of the primary electrodes (3, 4).

6. Gas laser according to one of the preceding claims, characterized in that the partially permeable output coupling element (10) and the fully reflective optical element (9) of the resonator are arranged together on one resonator side and the optical element (13) which folds the laser beam is arranged on the opposite resonator side.

FIG 1

1

2

3

HV 17 15' 5

15

16a 16b

5a 5b H

5c ⏚ 17

6 6

B 4

II II

FIG 2

11a 12a 8

11 12

5c 13

1

2

6

15 15'

6

6

4 5

5a 5b

9 10

7

14